(19) Europäisches Patentamt
European Patent Office
Office européen des brevets

(11) EP 0 399 833 B1

(12) **EUROPEAN PATENT SPECIFICATION**

(45) Date of publication and mention
of the grant of the patent:
**01.05.1996 Bulletin 1996/18**

(51) Int. Cl.⁶: **B01D 71/02**, H01M 8/12,
C25B 5/00

(21) Application number: **90305684.4**

(22) Date of filing: **24.05.1990**

(54) **Novel solid multi-component membranes, electrochemical reactor and use of membranes and reactor for oxidation reactions**

Feste Mehrkomponenten-Membranen, elektrochemischer Reaktor und Anwendung dieser Membranen und dieses Reaktors für Oxidationsreaktionen

Membranes solides à plusieurs composants, réacteur électrochimique et application de ces membranes et de ce réacteur à des réactions d'oxydation

(84) Designated Contracting States:
AT BE CH DE DK ES FR GB GR IT LI LU NL SE

(30) Priority: **25.05.1989 US 357317**
**16.04.1990 US 510296**

(43) Date of publication of application:
**28.11.1990 Bulletin 1990/48**

(60) Divisional application: **95201914.9**

(73) Proprietor: **THE STANDARD OIL COMPANY**
**Cleveland, Ohio 44114-2375 (US)**

(72) Inventors:
• **Cable, Thomas L.**
**Newbury, OH 44065 (US)**
• **Mazanec, Terry J.**
**Solon, OH 44139 (US)**
• **Frye, John G., Jnr.**
**Solon, OH 44139 (US)**

(74) Representative: **Barlow, Michael Thomas et al**
**BP INTERNATIONAL LIMITED**
**Patents & Agreements Division**
**Chertsey Road**
**Sunbury-on-Thames Middlesex TW16 7LN (GB)**

(56) References cited:
EP-A- 0 023 813       EP-A- 0 097 770
WO-A-83/02605         DE-A- 1 809 367
DE-A- 1 817 719

• PATENT ABSTRACTS OF JAPAN, vol. 5, no. 75 (C-55)[747], 19 May 1981
• PATENT ABSTRACTS OF JAPAN, vol. 10, no. 117 (E-400)[2174], 02 May 1986

EP 0 399 833 B1

## Description

TECHNICAL FIELD

This invention relates to the field of electrochemical reactors which facilitate the transfer of oxygen. In particular, this invention relates to multi-component oxygen semipermeable membranes, electrochemical reactors containing the oxygen semipermeable membrane and electrochemical processes which use the oxygen semipermeable membrane to facilitate oxygen transport from an oxygen-containing gas to a gas that consumes oxygen.

BACKGROUND OF THE INVENTION

Synthesis gas is composed primarily of hydrogen and carbon monoxide. Generally the $H_2/CO$ molar ratio is from about 0.6 to 6. The production of synthesis gas from light hydrocarbons such as methane and natural gas by partial oxidation is known. The present invention describes an electrochemical reactor having a two-phase mixed conductor membrane (hereinafter referred to as a "solid multi-component membrane" or "dual conductor membrane"), which facilitates the electrocatalytic conversion of light hydrocarbons to synthesis gas.

Other uses for the electrochemical reactor of the present invention include the partial oxidation of light hydrocarbons to form olefins, extraction of oxygen from one or more oxygen-containing gases such as $SO_2$, $SO_3$, $N_2O$, $NO$, $NO_2$, steam, $CO_2$, ammoxidation of methane, etc.

Sulfur and nitrogen oxides, for example, are well known noxious pollutants in gas streams emanating from stationary and mobile sources such as power plants, automobiles, ships, trains, etc. Sulfur oxides are known to combine with water vapor to form a highly corrosive vapor causing irritation to eyes and mucous membrane, damage to metal-containing structures, and environmental harm to vegetation due to acid rain. Nitrogen oxides are toxic irritants and are also damaging to the environment. Carbonyl sulfide (COS) is another toxic pollutant formed as a product of a reaction between a sulfur-containing compound and carbon monoxide in a gas stream effluent. Regulations on the discharge of these pollutants into the atmosphere have become increasingly stringent. The present invention describes an electrocatalytic process and electrochemical cell for removing sulfur and nitrogen oxides from gas streams which utilize the chemical driving force of a fuel gas.

U.S. Patent 3,630,879 to Spacil et al issued on December 28, 1971, describes a tubular solid oxygen-ion electrolyte cell structure free of electrical conductors for the generation of hydrogen gas by the dissociation of water. A structure is described which consists of a thin continuous cylinder of "internally short-circuited" solid oxygen-ion material having a first continuous porous electrode structure over its inner surface and a second continuous porous electrode structure over its outer surface.

Ounalli et al in "Hydrogen Production By Direct Thermolysis Of Water On Semipermeable Membrane", C.R. Acad. Sci. Paris. t. 292: 1185-1190 (1981), describe the use of a single phase mixed conductor as an oxygen semipermeable membrane. Using a membrane of calcia stabilized zirconia at 1400-1800°C, oxygen was extracted from steam to produce hydrogen, and the oxygen was transported through the membrane.

U.S. Patent 4,330,633 to Yoshisato et al issued on May 18, 1982, describes a solid electrolyte for selectively separating oxygen from a gaseous atmosphere having a high oxygen partial pressure into a gaseous atmosphere having a low oxygen partial pressure. The solid electrolyte is disclosed as composed of a sintered body consisting essentially of an oxide of cobalt, an oxide of at least one metal selected from strontium and lanthanum, and an oxide of at least one metal selected from bismuth and cerium.

Cales et al in "Fluorite-Type Solid Electrolytes As Oxygen Ion And Mixed Conductors", Progress in Solid Electrolytes, Wheat, T.A., Ahmad, A. and Kuriakose, A.K., editors, Energy of Mines and Resources, Ottawa, Canada (1983), proposed that selective oxygen pumping by certain solid oxide electrolytes at temperatures higher than about 1400°C might be explained by the existence of an internal partial short circuit in the electrolyte. A process in which a stabilized zirconia membrane is in an oxygen partial pressure gradient at a temperature between 1400°C and 1800°C is given as an example when selective oxygen pumping is thought to occur.

Numerous publications describe conventional fuel cells which completely oxidize methane to carbon dioxide and water. These fuel cells are not designed to conduct chemical processes, but rather to generate electricity from fuel gas and air (or oxygen). The processes conducted in fuel cells are selected for complete combustion rather than partial combustion and require completion of an external electric circuit for oxidation of fuel gas to proceed.

U.S. Patent No. 4,659,448 to Gordon issued on April 21, 1987, basically describes a process for the removal of $SO_x$ and $NO_x$ from flue gases using a solid state electrochemical ceramic cell. That process applies an external electrical potential to electrocatalytically reduce $SO_x$ and $NO_x$ to elemental sulfur (S) and free nitrogen ($N_2$). The oxygen apparently is removed through the solid electrolyte in what amounts to electrolysis.

"Electrochemical Abatement of Pollutants $NO_x$ and $SO_x$ in Combustion Exhaust Gases Employing a Solid-Oxide Electrolyte", D.M. Mason, in Gas Stream Cleanup Papers from DOE/METC-Sponsored Contractors Review Meetings in 1987, DOE/METC-87/6082, pp 152-159, describes a process for electrochemically "pumping" oxygen away from the surface of an electrode in contact with oxides of sulfur or nitrogen. The process is driven by the application of a voltage and can be considered to be an electrolysis.

U.S. Patent 4,791,079 to Hazbun, issued on December 13, 1988 and filed on June 9, 1986, describes a mixed ion and electron conducting catalytic ceramic membrane and its use in hydrocarbon oxidation or dehydrogenation processes. The membrane is described as consisting of two layers, one of which is an impervious mixed ion and electron conducting ceramic layer and the other is a porous catalyst-containing ion conducting ceramic layer. The impervious mixed ion and electron conducting ceramic membrane is further described at column 2, lines 57-62 as yttria stabilized zirconia which is doped with sufficient $CeO_2$ or titanium dioxide to impart electron conducting characteristics to the ceramic.

The present invention provides a solid multi-component membrane characterised by an intimate, gas-impervious, multiphase mixture which contains from 1 to 75 parts by volume of an electronically-conductive phase and from 25-99 parts by volume of an ionically-conductive phase, wherein the electronically-conductive phase comprises silver, gold, platinum, palladium, rhodium, ruthenium, bismuth oxide, a praeseodymium-indium oxide mixture, a cerium-lanthanum oxide mixture, a niobium-titanium oxide mixture, a magnesium-lanthanum-chromium oxide mixture, or $YBa_2Cu_3O_x$ wherein x is a number in the range from 6 to 7, or a mixture thereof.

An electrochemical reactor cell for transporting oxygen from any oxygen containing gas to any gas that consumes oxygen is also described which generally comprises a solid multi-component membrane having an entrance end, an exit end and a passage therebetween for the movement of one or more gases from the entrance to the exit end, wherein the solid membrane is the multi-component membrane defined above. This electrochemical reactor cell is placed in an environment containing an oxygen-containing gas on one side and an oxygen-consuming gas on the other side under reaction conditions of appropriate temperature and percentage of respective gases.

An electrochemical reactor for reacting an oxygen-consuming gas with an oxygen-containing gas is also described comprising a shell having an entrance end, an exit end and a passage therebetween for the movement of one or more gases from the entrance end to the exit end and a solid multi-component membrane, positioned within the shell, having an entrance end, an exit end and a passage therebetween for movement of one or more gases from the entrance end to the exit end, so that the shell and the solid membrane together form a first zone for introducing, reacting and expelling a first gas or gas mixture and a second zone within the solid membrane and separated from the first zone by the solid membrane for introducing, reacting and expelling a second gas or gas mixture, wherein the solid membrane is the multi-component membrane defined above.

Further included within the scope of the present invention is an electrochemical process for oxidizing a reactant gas. The term "reactant gas" is defined herein as a gas which is capable of reacting with oxygen or oxygen ions.

One aspect of the present invention is an electrochemical process for oxidizing methane, natural gas or other light hydrocarbons to unsaturated hydrocarbons or synthesis gas. The electrochemical process generally comprises

(A) providing an electrochemical cell comprising a first zone and a second zone separated from the first zone by the solid multi-component membrane defined above,
(B) heating the electrochemical cell to a temperature of from about 300°C to about 1400°C,
(C) passing an oxygen-containing gas in contact with the membrane in the first zone, and
(D) passing methane, natural gas or other light hydrocarbon in contact with the membrane in the second zone.
The above process may further comprise
(E) recovering the product from the second zone.

When the present invention is an electrochemical process for oxidizing methane, natural gas or other light hydrocarbons to synthesis gas, the electrochemical process comprises

(A) providing an electrochemical cell comprising a first zone and a second zone separated from the first zone by the solid multi-component membrane defined above,
(B) heating the electrochemical cell to a temperature of from about 1000°C to about 1400°C,
(C) passing an oxygen containing gas in contact with the membrane in the first zone, and
(D) passing methane, natural gas or other light hydrocarbon in contact with the membrane in the second zone.
The above process may further comprise
(E) recovering the synthesis gas from the second zone.

Another aspect of the present invention is an electrochemical process for extracting oxygen from an oxygen-containing gas which comprises

(A) providing an electrochemical cell comprising a first zone and a second zone separated from the first zone by the solid multi-component membrane defined above,
(B) passing an oxygen-containing gas in contact with the membrane in the first zone, and
(C) passing a reactant gas in contact with the membrane in the second zone.

When the present invention is an electrochemical process for extracting oxygen from a gas containing oxygen other than as free oxygen such as $SO_2$, $SO_3$, $N_2O$, NO or $NO_2$, the electrochemical process comprises

(A) providing an electrochemical cell comprising a first zone and a second zone separated from the first zone by the solid multi-component membrane defined above,

(B) passing a gas containing an oxygen-containing gas wherein oxygen is present in a form other than as free oxygen in contact with the membrane in the first zone, and

(C) passing a reactant gas in contact with the membrane in the second zone.

In one embodiment, the electrochemical cell includes a catalyst adjacent to or coated on the membrane in the first zone.

If a desirable product is obtained by the above oxygen extraction processes, such as synthesis gas, unsaturated hydrocarbons, elemental sulfur, or oxygen-free gas, those processes may further comprise recovering the desired product from the zone in which it is produced. Oxygen-free gas may, for example, be recovered from the first zone.

When the present invention is an electrochemical process for oxidizing methane and ammonia to hydrogen cyanide, the electrochemical process comprises

(A) providing an electrochemical cell comprising a first zone and a second zone separated from the first zone by the solid multi-component membrane defined above,

(B) heating the electrochemical cell to a temperature of from about 1000°C to about 1400°C,

(C) passing an oxygen-containing gas in contact with the membrane in the first zone, and

(D) passing methane and ammonia in contact with the membrane in the second zone.

The above process may further comprise

(E) recovering hydrogen cyanide from the second zone.

## BRIEF DESCRIPTION OF THE DRAWINGS

In the annexed drawings:

Fig. 1 is a side view, and cross-section of a first embodiment of the electrochemical reactor of the present invention;

Fig. 2 is a top view, and cross-section of a second embodiment of the electrochemical reactor of the present invention;

Fig. 3 is a side view, and cross-section of the reactor shown in Fig. 2;

Fig. 4 is an electron photomicrograph back scattered image of the surface of one embodiment of the solid multi-component membrane of the present invention at 500 times magnification; and

Fig. 5 is an electron photomicrograph of a cross-section of the same solid multi-component membrane shown in Fig. 4 at 5,000 times magnification.

Figure 6 is a top view, and cross-section, of a third embodiment of an electrochemical cell useful for carrying out the process of the invention.

Figure 7 is a side view, and cross-section, of the reactor shown in Figure 6.

## DESCRIPTION OF THE PREFERRED EMBODIMENTS

This invention provides an electrochemical reactor for a continuous process for transporting oxygen from any oxygen-containing gas to any reactant gas that consumes oxygen. Processes which may be conducted with the present invention are, for example, the combustion of hydrogen to produce water, the partial oxidation of methane or natural gas to produce unsaturated compounds or synthesis gas, the partial oxidation of ethane, extraction of oxygen from oxygen-containing gases (e.g., extraction of oxygen from $NO_x$, wherein x has a value from 0.5 to 2, $SO_y$, wherein y has a value from 2 to 3, steam, $CO_2$, etc.), ammoxidation of methane to hydrogen cyanide, etc.

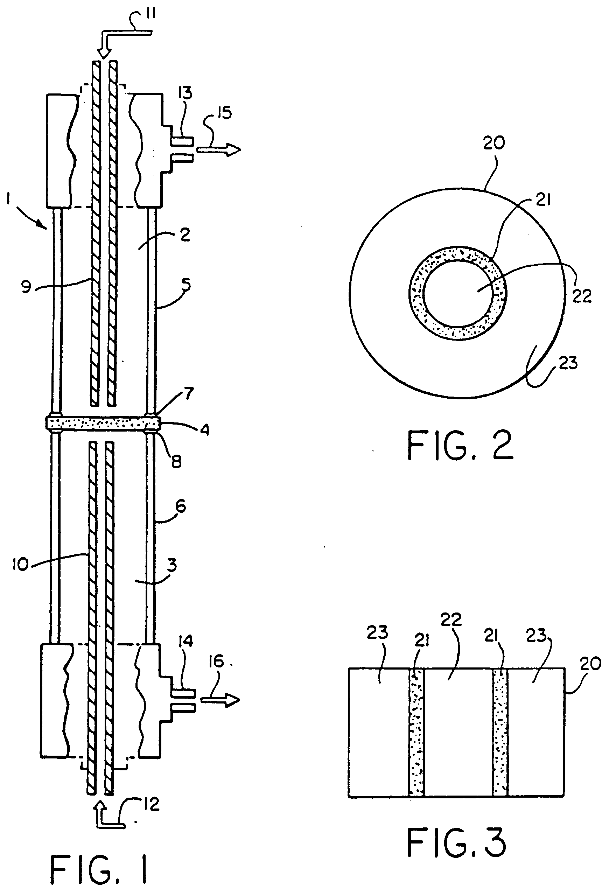

One embodiment of the electrochemical reactor of the present invention may be schematically represented as shown in Fig. 1, wherein the side view, and cross-section of the reactor 1 shows a first zone 2 separated from a second zone 3 by a solid multi-component membrane 4. The outer perimeter of the first zone is defined by reactor tube 5 and the outer perimeter of the second zone is defined by reactor tube 6. Reactor tubes 5 and 6 form a gas-tight seal with membrane 4 by means of glass seals 7 and 8, respectively. Feed tubes 9 and 10 conduct the oxygen-containing gas 11 and oxygen-consuming gas 12 into zones 2 and 3, respectively. Exit ports 13 and 14 permit reacted gases 15 and 16 to escape zones 2 and 3, respectively.

In practice, an oxygen-containing gas or gas mixture, such as air, is passed in contact with the solid membrane in the first zone, and the oxygen-consuming gas or gas mixture, such as a reactant gas-containing feed gas, is passed in contact with the solid membrane in the second zone. As the oxygen-containing gas or gas mixture contacts the solid membrane, oxygen is reduced to oxygen ions which are transported through the solid electrolyte to the surface facing the second zone. At the second zone, the oxygen ions react with the oxygen-consuming gas or gas mixture, oxidizing the oxygen-consuming gas and releasing electrons. The electrons return to the surface facing the first zone via the solid membrane.

In one embodiment, the oxygen-consuming gas is methane or natural gas, and the oxygen-containing gas or gas mixture is air. As air contacts the membrane, the oxygen component of air is reduced to oxygen ions which are transported through the membrane to the second zone where the oxygen ions react with the methane to produce synthesis gas or olefins, depending on the reaction conditions.

In another embodiment, the oxygen-consuming gas is methane, natural gas, or hydrogen and the oxygen-containing gas is a flue or exhaust gas containing $NO_x$ and/or $SO_y$, wherein x and y are defined as above. As the flue gas contacts the membrane, the oxygen of $NO_x$ and/or $SO_y$ is reduced to oxygen ions which are transported through the membrane to the second zone where the oxygen ions react with the oxygen-consuming gas to produce carbon dioxide and water, synthesis gas or olefins, depending on the reaction conditions. Nitrogen gas and elemental sulfur are electrochemically produced from $NO_x$ and $SO_y$, respectively, in the first zone.

In yet another embodiment of the present invention, the oxygen-containing gas is a gas containing steam (i.e., $H_2O$ gas). As $H_2O$ contacts the membrane, the water is reduced in the first zone to hydrogen gas and to oxygen ions which are transported through the membrane to the second zone where the oxygen ions react with methane or natural gas, for example. The hydrogen gas may be recovered and used, for example, to hydrogenate unsaturated hydrocarbons, provide fuel for an electrical current generating fuel cell, to provide fuel for heating the electrochemical cell of this invention or to provide a reactant gas for the electrochemical process for extracting oxygen from an oxygen-containing gas in accordance with the present invention.

Materials which are copresent may participate in electrochemical reduction or oxidation taking place at the membrane of the present invention. When, for example, methane is present with ammonia in the second zone and an oxygen-containing gas is present in the first zone, hydrogen cyanide and water may be produced electrochemically in the second zone.

Other combinations of materials reactive with each other to produce a wide range of products are possible and are contemplated as being within the scope of the present invention.

The terms "oxygen-consuming gas", "reactant gas" and "oxygen-containing gas" herein include materials which are not gases at temperatures below the temperature ranges of the pertinent process of the present invention, and may include materials which are liquid or solid at room temperature. An example of an oxygen-containing gas which is liquid at room temperature is steam.

As mentioned above, the solid multi-component membrane used in the electrochemical reactor of the present invention may be an intimate, gas-impervious, multi-phase mixture of any electronically-conducting material (as defined above) with any oxygen ion-conducting material and optionally a gas impervious "single phase" mixed metal oxides having a perovskite structure and having both electron-conductive and oxygen ion-conductive properties. The phrase "gas-impervious" is defined herein to mean "substantially gas-impervious or gas-tight" in that the mixture does not permit a substantial amount of the above-described oxygen-consuming or oxygen-containing gas to pass through the mixture as a gas (i.e., the mixture is non-porous, rather than porous, with respect to the relevant gases). In some cases, a minor degree of perviousness to gases might be acceptable or unavoidable, such as when hydrogen gas is present.

The term "mixtures" in relation to the solid multi-component membrane includes materials comprised of two or more solid phases, and single-phase materials in which the atoms of the various elements are intermingled in the same solid phase, such as in the yttria-stabilized zirconia mentioned below. The examples of preferred metal-doped metal oxides are single-phase materials whereas the phrase "multi-phase mixture" refers to a composition which contains two or more solid phases interspersed without forming a single phase solution.

In other words, the multi-phase mixture is "multi-phase", because the electronically-conductive material and the oxygen ion-conductive material are present as at least two solid phases in the gas impervious solid membrane, such that the atoms of the various components of the multi-component membrane are, for the most part, not intermingled in the same solid phase.

The multi-phase solid membrane of the present invention differs substantially from "doped" materials known in the art. A typical doping procedure involves adding small amounts of an element, or its oxide (i.e., dopant), to a large amount of a composition (i.e., host material), such that the atoms of the dopant become permanently intermingled with the atoms of the host material during the doping process, whereby the material forms a single phase. The multi-phase solid membrane of the present invention, on the other hand, comprises an oxygen ion conductive material and an electronically conductive material that are not present in the dopant/host material relationship described above, but are present in substantially discrete phases. Hence, the solid membrane of the present invention, rather than being a doped material, may be referred to as a two-phase, dual-conductor, multi-phase, or multi-component membrane.

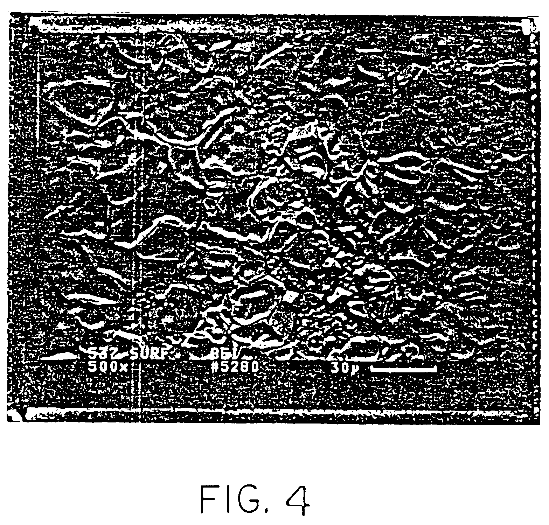

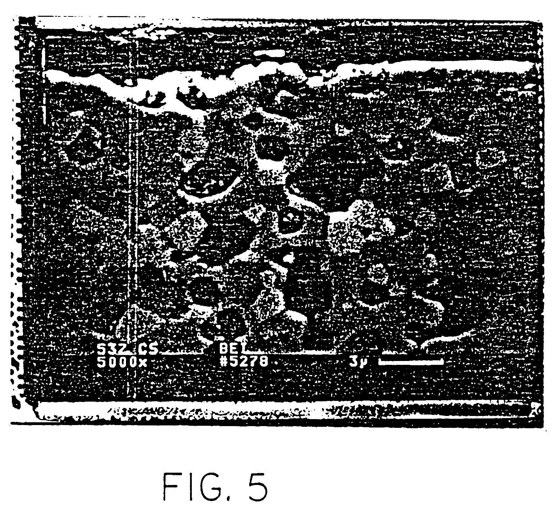

The multi-phase membrane of the present invention can be distinguished from the doped materials by such routine procedures as electron microscopy, X-ray diffraction analysis, X-ray adsorption mapping, electron diffraction analysis, infrared analysis, etc., which can detect differences in composition over a multi-phase region of the membrane. An example of such physical evidence of multi-phase composition is the electron photomicrographs shown as Fig. 4 and Fig. 5. A detailed explanation of Fig. 4 and Fig. 5 follows Examples 1-5 below.

Typically, the oxygen ion-conducting materials or phases of the dual-conductor are solid solutions formed between oxides containing divalent and trivalent cations such as calcium oxide, scandium oxide, yttrium oxide, lanthanum oxide, etc., with oxides containing tetravalent cations such as zirconia, thoria and ceria or the oxygen ion-conducting materials or phases comprise an oxygen ion-conductive mixed metal oxide of a perovskite structure. Their higher ionic conductivity is believed to be due to the existence of oxygen ion site vacancies. One oxygen ion vacancy occurs for each divalent or each two trivalent cations that are substituted for a tetravalent ion in the lattice. Any of a large number of oxides such as yttria-stabilized zirconia, doped ceria, thoria-based materials, or doped bismuth oxides may be used. Some of the known solid oxide transfer materials include $Y_2O_3$-stabilized $ZrO_2$, CaO-stabilized $ZrO_2$, $Sc_2O_3$-stabilized $ZrO_2$, $Y_2O_3$-stabilized $Bi_2O_3$, $Y_2O_3$-stabilized $CeO_2$, CaO-stabilized $CeO_2$, $ThO_2$, $Y_2O_3$-stabilized $ThO_2$, or $ThO_2$, $ZrO_2$, $Bi_2O_3$, $CeO_2$, or $HfO_2$ stabilized by addition of any one of the lanthanide oxides or CaO. Many other oxides are known which have demonstrated oxygen ion-conducting ability which could be used in the multi-phase mixtures, and they are included in the present concept.

Preferred among these solid electrolytes are the $Y_2O_3$- (Yttria) and CaO-(calcia) stabilized $ZrO_2$ (zirconia) materials. These two solid electrolytes are characterized by their high ionic conductivity, their oxygen ion conduction over wide ranges of temperature and oxygen pressure, and their relatively low cost.

In addition, the inventors have found that mixed metal oxides having a perovskite structure (at operating temperatures) can have very good oxygen ion conductivity. The term "perovskites" refers to a class of materials which have a structure based upon the structure of the mineral perovskite, $CaTiO_3$. In its idealized form, the perovskite structure has a cubic lattice in which a unit cell contains metal ions at the corners of the cell, another metal ion in its center and oxygen ions at the midpoints of the cube's edges. This is referred to as an $ABO_3$-type structure, in which A and B represent metal ions.

In general, perovskite structures require that the sum of the valences of A and B ions be 6, and the relationship between the radii of the ions in an $ABO_3$ structure containing two metal ions may be expressed by the formula

$$r_A + r_X = t\sqrt{2}\,(r_B + r_X)$$

wherein $r_A$, $r_B$ and $r_X$ are the radii of the A ion, B ion and oxygen ion, respectively, and t is a "tolerance factor" which may lie within the approximate range of 0.7-1.0. In general, compounds having the perovskite structure have an A ion with a radius of between about 1.0 to about 1.4 angstrom and a B ion with a radius of between about 0.45 to about 0.75 angstrom. The inventors find generally that when mixed metal oxides of a perovskite structure contain A ions having radii approaching the low end of the A ion radius range for a given B ion as determined by the above formula, then oxygen ion conductivity generally increases. This trend toward increased oxygen ion conductivity can, however, be limited by greater instability of the perovskite structure at operating temperatures as A ion radii approach the lower limit of the desired radii for perovskites having a given B ion.

A wide variety of elements and oxides of elements may be used to form perovskites useful in the present invention. In general, any combination of metallic elements which satisfy the requirements of a perovskite may be used. Typical examples of such elements are the lanthanides, the metals of Groups Ia and IIa, the transition elements, Al, Ga, Ge, etc. Examples of preferred elements include La, Co, Sr, Ca, Fe, Cu, Ni, Mn, Or, Y, Ba, Ti, Ce, Al, Sm, Pr, Nd, V, Gd, Ru, Pb, Na, W, Sc, Hf, Zr, oxides thereof, and mixtures thereof. Bi and/or Ce are typically not required in the preferred embodiments, but may be present if desired. Preferably, Bi and/or Ce are present in amounts less than 13 mol%. More preferably, Bi and/or Ce are present in amounts less than about 10 mol%.

Preferred examples of A metals in the $ABO_3$-type materials useful in the present invention include the lanthanides (La, Ce, Pr, Nd, Pm, Sm, Eu, Gd, Tb, Dy, Ho, Er, Tm, Yb, and Lu), yttrium and the alkaline earth metals, particularly Mg, Ca, Sr, and Ba.

Preferred B metals in the $ABO_3$ materials for the present invention include the first row of transition elements, namely Sc, Ti, V, Cr, Mn, Fe, Co, Ni, Cu, and Zn. Among these elements, cobalt is more preferred.

The perovskite structure is tolerant of a wide variety of multiple cation substitutions on both the A and B sites, so that a variety of more complex perovskite compounds containing a mixture of A metals and B metals are useful for this invention. Perovskite materials containing more than 2 elements besides oxygen are preferred.

Examples of mixed metal oxides having a perovskite structure which are useful as solid oxygen ion-conductive electrolyte in the present invention include lanthanum-strontium-cobaltite, lanthanum-strontium-ferrite, lanthanum-calcium-cobaltite, strontium-ferrite, strontium-cobaltite, gadolinium-strontium-cobaltite, etc., and mixtures thereof. Specific examples are $La_aSr_bCoO_3$, $La_aSr_bFeO_3$, $La_aCa_bCoO_3$, $SrCo_aFe_bO_3$, $Gd_aSr_bCoO_3$, etc., wherein a and b are numbers, the sum of which equals 1. The molar ratio between the respective metals represented by a:b may cover a wide range. Typical doping ratios of a:b are 4:1, 3:1, 1:4, 1:3, etc.

Useful $ABO_3$-type compounds and how to make them are described in Dow Chemical Company's PCT Application No. 89085506, published on March 9, 1989 under Publication No. WO 89/01922; Muller and Roy, "The Major Ternary Structural Families", pp. 175-201 (1974); Lines, M.E. and Glass, A.M., "Principles and Applications of Ferroelectrics and Related Materials"; pp. 280-92 and Appendix F, pp. 620-32 (Clarendon Press), Oxford (1977); and Evans, R.D., "An Introduction to Crystal Chemistry", Cambridge Univ. Press., Cambridge, 2nd ed. (1964), pp. 167-71. Each of these references is hereby incorporated by reference for their disclosure relating to perovskites.

The electronically-conducting material or phase of the membrane can be any material as defined above which exhibits sufficient electronic conductivity under the conditions of the reaction. Typically, the electronically-conducting phase is comprised of one or more metals or metal oxides which display appreciable electronic conductivity at reaction temperatures. Suitable metals include silver, gold, platinum, rhodium, ruthenium, palladium. Nickel, cobalt, and/or copper can be additionally present. Palladium and platinum are preferred. Examples of suitable metal oxides include bismuth oxide, a praseodymium-indium oxide mixture, a cerium-lanthanum oxide mixture, and a niobium-titanium oxide mixture. Additionally also tin-indium oxide mixtures and/or electron-conductive mixed metal oxides of a perovskite structure may be present. The metal-doped metal oxides, such as a praseodymium-doped indium oxide, a cerium-doped lanthanum oxide and a niobium-doped titanium oxide mixture are preferred. Among the metal-doped metal oxides, a praeseodymium-doped indium oxide is the most preferred.

In many $ABO_3$-type mixed metal oxide compounds, the actual structure is a continuum of a pseudosymmetric variant derived from the perfectly symmetrical simple cubic structure by small displacements of the ions. In some cases these displacements result in a slight distortion of the unit cell, the symmetry of which is accordingly reduced to tetragonal or orthorhombic, and in others the deformation is such that adjacent cells are no longer precisely identical so that the true unit cell comprises more than one of the smaller units. The ferroelectric properties of many of these oxides are due to such departures from an ideal structure.

Electron-conductivity of mixed metal oxides having a perovskite structure generally increases when the A ion is partially substituted, or "doped", with a divalent metallic cation, such as Ba, Ca, or Sr. This trend toward greater electron-conductivity is often accompanied by greater instability at operating temperatures. Perovskites partially decomposed into a different structure might have electron conductivity which differs substantially from that of the original perovskite structure.

The electron-conductive mixed metal oxide materials can also be selected from lanthanum-magnesium chromite, $YBa_2Cu_3O_x$, wherein x is a number in the range from 6 to 7 and mixtures thereof.

As mentioned above, the solid multi-component membrane used in the electrochemical reactor of the present invention may, in addition to a multi-phase multi-component membrane, comprise a gas impervious "single phase" mixed metal oxides having a perovskite structure and having both electron-conductive and oxygen ion-conductive properties. Many of the aforedescribed perovskite-type materials are suitable for this aspect of the present invention. Specific examples of perovskite materials which are useful include, but are not limited to, the following materials:

$LaCoO_3$;
$La_{.6}Sr_{.4}CoO_3$;
$La_{.2}Sr_{.8}CoO_3$;
$YCoO_3$;
$YBa_2Cu_3O_x$

wherein x is a number in the range from about 6 to 7, etc.

Mixtures of perovskites with additional conductive metal or metal oxide are also useful in preparing the multi-component membrane used in the present invention. The additional conductive metal or metal oxide may be the same as, or different from, the elements present in the perovskite. The additional conductive metal or metal oxide has been found to form a separate phase from the perovskite material upon heating, providing additional conductive materials through the perovskite to form electron-conductive pathways through the membrane.

The inventors have found that some perovskites tend to be somewhat more electron-conductive, as opposed to oxygen ion-conductive, whereas other perovskites tend to be somewhat more oxygen ion-conductive, as opposed to electron-conductive. In a preferred embodiment, the multi-component membrane comprises a mixture of two or more perovskites, each perovskite having advantages in electron-conductivity or oxygen ion-conductivity, and includes additional conductive metal or metal oxide as discussed above.

Perovskites also have varying degrees of stability with regard to the presence of a reducing gas and other reactive gas components. Since the process of the present invention exposes the membrane surface to such reactive components, it may be desirable to protect the surface of the multi-component membrane by formulating the surface of the membrane, or coating the membrane, with metal, metal oxide, or perovskite which has stability towards the gas in which it will be in contact when in use. Making the final layer of a perovskite multi-component membrane a layer which contains a lanthanide and chromium, rather than a lanthanide and cobalt, for example, would be one way to help preserve the stability of the surface exposed to a reactive gas such as a reducing gas.

These multi-phase multi-component membranes contain from 1 to 75 parts by volume of an electron-conductive material as defined above and from 25 to 99 parts by volume of an oxygen ion-conductive material. The elements Bi, Ce, and Ti, individually or collectively, may be excluded in the preferred embodiments.

The multi-component membrane is fabricated by combining at least one of the electronically-conducting materials with at least one of the oxygen ion-conducting materials and shaping the combined materials to form a dense, gas-tight, multi-phase solid membrane. In particular, the solid membrane may be prepared by a process which comprises the steps of

(A) preparing an intimate mixture of at least one material, as defined above, which is electronically-conductive, and at least one oxygen ion-conductive material,
(B) forming the mixture into a desired shape, and
(C) heating the formed mixture to a temperature of at least about 500°C to form a dense and solid membrane.

The solid membrane may also be prepared from at least one metal oxide as defined above, the metal of which is electronically-conductive, by a process which comprises the steps of

(A) preparing an intimate mixture of at least one metal oxide as defined above, the metal of which is electronically-conductive, and at least one oxygen ion-conductive material,

(B) heating the mixture at an elevated temperature in a reducing atmosphere to reduce the metal oxide to metal,

(C) forming the reduced mixture into a desired shape, and

(D) heating the formed mixture to a temperature of at least about 500°C to form a dense and solid membrane.

In the above processes for making the multi-component membranes a binding agent is generally added to the mixture prior to the final heating step to aid in binding the metal and/or metal oxide particles to form a desired shape. The agent is preferably a material which does not interfere with the formation of a dense and solid membrane in the final step of heating the formed mixture to a temperature of at least 500°C and is capable of being easily dispersed in the mixture. Such a binding agent may, for example, be a wax or paraffinic hydrocarbon dispersed or dissolved in an appropriate solvent. A specific example of a binding agent is Carbowax 20M™ (Supelco) dissolved in sufficient chloroform to distribute a binding amount of wax on the electronically-conductive and oxygen ion-conductive particles.

Modification and/or additional formation of perovskite structures may occur under reaction conditions in the reactor cell comprising the mixed metal oxides of perovskite structure.

The solid membrane may comprise the multicomponent membrane optionally deposited on a solid material which is porous to the reactant or product gases and which functions as a support for the solid membrane. The porous solid may be any material which achieves the desired objective as long as it does not interfere with the reaction process under reaction conditions. Any of a large number of oxides, including yttria-stabilized zirconia, doped ceria, thoria-based materials, or doped bismuth oxides mentioned as oxygen-conducting materials and various other metal oxides may be used. Examples include CaO-stabilized $ZrO_2$; $Y_2O_3$-stabilized $ZrO_2$; $Sc_2O_3$-stabilized $ZrO_2$; $Y_2O_3$-stabilized $Bi_2O_3$; $Y_2O_3$-stabilized $CeO_2$; CaO-stabilized $CeO_2$; $ThO_2$; $Y_2O_3$-stabilized $ThO_2$; $ThO_2$, $ZrO_2$, $Bi_2O_3$, $CeO_2$ or $HfO_2$ stabilized by the addition of any one of the lanthanide oxides or CaO; $Al_2O_3$; etc.

The membranes of the present invention may be applied to a supporting substrate by any technique such as vapor deposition onto a porous substrate, impregnating a porous substrate, co-impregnating a porous support substrate, or any other technique commonly used to prepare ceramics. Alternatively, the membranes may be prepared by tape casting of a slurry mixture, slip-casting, or other techniques. Another technique is heat treating the formed membrane precursor to form a stable structure, or until it is gas-tight, and attaching the resulting membranes to a support structure and further heat treating to achieve the finished, supported membrane. Other techniques are possible so long as the supporting substrate permits an oxygen-containing gas and an oxygen-consuming gas to come into contact with the membrane of the present invention.

The present invention may further be exemplified by reference to Figs. 2 and 3 which illustrate other embodiments of an electrochemical cell and solid membrane of the invention. Fig. 2 is a top view of an electrochemical cell useful in an embodiment of the electrochemical reactor of the present invention different from the electrochemical reactor shown in Fig. 1, and Fig. 3 is a side view, and a cross-section, of the same cell as that shown in Fig. 2. In both Figs. 2 and 3, the electrochemical cell comprises a shell 20 in which is placed a circular solid cylindrical dual-conductor core 21. As can be seen from the construction illustrated in Figs. 2 and 3, the cell contains an inner passage 22 within the core 21 traversing the entire length of the core 21 and an outer passage 23 between the outside surface of the core 21 and the inside surface of the shell 20.

In practice, the process of the present invention is conducted with an apparatus such as illustrated in Figs. 2 and 3 by passing, for example, an oxygen-consuming gas through the inner passage 22 and an oxygen-containing gas through the outer passage 23. The oxygen-containing gas which contacts the outside surface of the dual-conductor core 21 is converted to oxygen ions which migrate through the solid core 21 to the inside surface of the core 21. At the inside surface of the core 21, the oxygen ions react with the oxygen-consuming gas contacting the inside surface. During this reaction, each oxygen ion loses two electrons which travel from the inside surface of the core 21 to the outside surface of the core 21.

The above process can, of course, be reversed by passing an oxygen-containing gas through the inner passage 22 and an oxygen-consuming gas through the outer passage 23. Oxygen ions would then migrate through the solid core 21 to the outside surface of the core 21 and electrons would travel to the inside surface.

Typically for a process in which synthesis gas is made from lighter hydrocarbons, for example, one or more light hydrocarbons are in the inner passage 22, and if a porous support for the membrane of solid core 21 is present, the porous support normally is on the outside surface of the membrane. However, the decision as to which zones to use for the oxygen-consuming gas and the oxygen-containing gas, and the location of a porous support, if any, will depend on which arrangement is most suitable for the particular application of the present invention. Determination of the most appropriate arrangement is well within the ability of one of ordinary skill to determine without undue experimentation.

## Optional catalyst

The electrochemical cell utilized in the process of the present invention may optionally contain a catalyst adjacent to or coated on the first conductive surface. When the electrochemical cell is used for gas cleanup, for example, the inventors have found that the presence of a catalyst can facilitate reduction of oxides of sulfur and nitrogen and/or facilitate decomposition or carbonyl sulfide at the first conductive surface (i.e., cathode) of the electrochemical cell.

The catalyst may be present as a film over the surface of the solid membrane of the electrochemical cell, dispersed or intermingled at the surface of the solid membrane (e.g., by doping the membrane surface), or present in the form of discrete particles or fibers packed adjacent to the surface of the cell membrane.

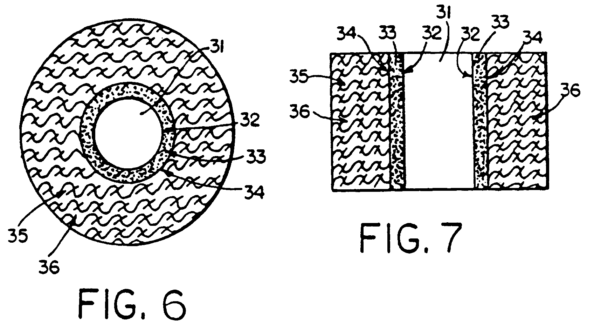

In one embodiment, the process may be conducted in a cell such as shown in Figs. 6 and 7, wherein the solid, multi-component membrane 33 has a first surface 34 which is capable of reducing oxygen to oxygen ions. Adjacent to the first surface 34 is a first passageway 36 containing the catalyst 35. The membrane 33 has a second surface 32 capable of reacting oxygen ions with an oxygen-consuming gas in a second passageway 31.

In practice, the process of the present invention is conducted with an apparatus such as illustrated in Figs. 6 and 7 similarly to the process using the apparatus of Figs. 2 and 3.

The preferred embodiments of the electrochemical process follow.

(1) The electrochemical process for oxidizing a reactant gas to form synthesis gas utilizing the electrochemical reactor of the present invention is conducted at a temperature of from about 1000°C to about 1400°C. In one embodiment the process is conducted at temperatures within the range of 1000 to 1300°C. The electrolytic cell may be heated to the desired temperature and the temperature may be maintained during the reaction by external heating and/or the exothermicity of the reaction.

The oxygen-containing gas which is passed in contact with the solid membrane on the side facing the first zone can be air, pure oxygen, or any other gas containing at least 1% free oxygen. In another embodiment, the oxygen-containing gas contains oxygen in other forms such as $N_2O$, NO, $NO_2$, $SO_2$, $SO_3$, steam, $CO_2$, etc. Preferably, the oxygen-containing gas contains at least about 1% free oxygen, and more preferably the oxygen-containing gas is air.

The feed gases which are treated in accordance with this process for making synthesis gas may comprise light hydrocarbons such as methane, natural gas, ethane, or other light hydrocarbon mixtures. The natural gas can be either wellhead natural gas or processed natural gas. The composition of the processed natural gas varies with the needs of the ultimate user. A typical processed natural gas composition contains about 70% by weight of methane, about 10% by weight of ethane, 10% to 15% of $CO_2$, and the balance is made up of smaller amounts of propane, butane and nitrogen.

The light hydrocarbon gas feed can be mixed with any inert diluent such as nitrogen, helium, neon, argon, krypton, xenon, or any other gas, including steam, which does not interfere with the desired reaction. Nitrogen and steam are diluents of choice.

The synthesis gas produced by this process of the invention at the solid membrane surface facing the second zone is substantially nitrogen-free and comprises a mixture of hydrogen and carbon monoxide, and may contain some acetylene or ethylene or both. The synthesis gas also contains only small amounts of carbon dioxide. The synthesis gas can be converted to liquids using the Fischer-Tropsch process and can be converted to methanol by commercial processes.

(2) The electrochemical process for oxidizing methane, natural gas or other light hydrocarbons to unsaturated hydrocarbons in accordance with the present invention is conducted utilizing the electrochemical reactor of the present invention at a temperature of about 300°C up to but not including 1000°C. In one embodiment the process is conducted at temperatures within the range of about 550°C to about 950°C, and more specifically within the range of 750°C to 950°C. The electrolytic cell may be heated to the desired temperature and the temperature may be maintained during the reaction by external heating and/or utilizing the exothermicity of the reaction.

The oxygen-containing gas which is passed in contact with the solid membrane on the side facing the first zone can be air, pure oxygen, or any other gas containing at least 1% free oxygen. In another embodiment, the oxygen-containing gas contains oxygen in other forms such as $N_2O$, NO, $NO_2$, $SO_2$, $SO_3$, steam, $CO_2$, etc. Preferably, the oxygen-containing gas contains at least about 1% free oxygen, and more preferably the oxygen-containing gas is air.

The feed gases which are treated in accordance with this process of the present invention may comprise light hydrocarbons such as methane, natural gas, ethane, or other light hydrocarbon mixtures. A methane-containing feed gas, for example, can be methane or natural gas or any other gas which contains at least 50% methane. The natural gas can be either wellhead natural gas or processed natural gas. The composition of the processed natural gas varies with the needs of the ultimate user. A typical processed natural gas composition contains about 70% by weight of methane, about 10% by weight of ethane, 10% to 15% of $CO_2$, and the balance is made up of smaller amounts of propane, butane and nitrogen.

The light hydrocarbon gas feed can be mixed with any inert diluent such as nitrogen, helium, neon, argon, krypton, xenon, or any other gas, including steam, which does not interfere with the desired reaction. Nitrogen and steam are diluents of choice.

The unsaturated hydrocarbons produced by this process of the invention at the solid membrane surface facing the second zone are, for example, ethylene, acetylene, propylene, butylene, isobutylene, and mixtures thereof.

(3) The electrochemical process for extracting oxygen from an oxygen-containing gas in accordance with the present invention is conducted utilizing the electrochemical cell of the present invention. The process is generally conducted at a temperature within the range of about 300°C to about 1400°C. In one embodiment, the process may be conducted in the range from about 500°C to about 1400°C. In another embodiment the processs is conducted within the range of about 700°C to about 1100°C. In a preferred embodiment, the process is conducted at a temperature of at least about 400°C and is preferably no greater than about 1000°C, and even more preferably no greater than about 900°C. The electrochemical cell may be heated to the desired temperature and the temperature may be maintained during the reaction by utilizing a hot flue gas, external heating, and/or utilizing the exothermicity of the reaction.

The oxygen-containing gas which is treated in accordance with the process of the present invention may be any gas which contains free oxygen and/or contains oxygen in other forms such as $N_2O$, $NO$, $NO_2$, $SO_2$, $SO_3$, $H_2O(g)$ (i.e., steam), $CO_2$, or a mixture of oxygen-containing gases, such as a flue gas, etc.

The reactant gas comprises any gas which is capable of reacting with oxygen or oxygen ions, including one or more hydrocarbons which are in the gas phase and capable of reacting with oxygen or oxygen ions under process conditions such as saturated and unsaturated lower aliphatic hydrocarbons such as methane, natural gas, ethane, ethene, acetylene, propane, propene, propyne, butane, butene, butyne, isobutane, isobutene, etc., saturated and unsaturated lower cyclic hydrocarbons such as cyclopropane, cyclobutane, cyclobutene, etc., aromatic hydrocarbons such as benzene, naphthalene, etc., and mixtures thereof; natural gas; hydrogen; carbon monoxide; hydrogen sulfide; methanol; ammonia; etc.; and mixtures thereof. Selecting one or more gases which are capable of reacting with oxygen or oxygen ions under the reaction conditions of the present invention is within the purview of those skilled in the art.

Preferred reactant gases or gas mixtures for use in this process are those that are inexpensive per unit of volume, are a by-product of an industrial process, and/or form useful products when they react with oxygen or oxygen ions. A particularly preferred gas for use as a reactant gas is natural gas.

In one embodiment of this process of the present invention, at least one electrochemical cell is provided in the path of flue or exhaust gases for cleaning, purifying or recycling flue or exhaust gas emissions. The electrochemical cell in this process comprises a solid multicomponent membrane of the present invention which separates a reactant gas zone from a zone containing flue or exhaust gas. The gas containing oxides of sulfur and/or nitrogen which is passed in contact with the first surface or cathode can contain $SO_2$, $SO_3$, $NO_2$, $NO$, $N_2O$, etc., in amounts as low as about 0.001 mol% up to 100 mol%. Preferably, the amount of sulfur and/or nitrogen in the gas stream to be treated is in the range from about 0.005 to about 5 mol%, and more preferably in the range from about 0.1 to about 1 mol%, since typical flue and exhaust streams contain oxides of sulfur and/or nitrogen in this more preferred range of operation.

In addition to sulfur and/or nitrogen oxides the gas stream to be purified may also contain other components, such as nitrogen gas, oxygen gas, argon, helium, carbon dioxide, steam, carbon monoxide, unburned fuel, etc. The presence of oxygen-containing gases such as oxygen gas and carbon dioxide, for example, may waste some of the fuel gas used to convert oxides of sulfur and/or nitrogen. The inventors have found, however, that the present invention is particularly economical when used with such gas stream, since the additional fuel gas utilized is far less expensive than electricity used in electrolytic processes such as that disclosed in U.S. Patent 4,659,448 under the prevailing cost of fuel gas versus kilowatt hours of electricity in most areas.

Preferred catalysts for the first passageway include oxides of lanthanum, oxides of lanthanum doped with europium (Eu), oxide of a mixture of lanthanum, strontium and cobalt, oxides of molybdenum and oxides of tungsten. Specific examples of catalysts for reducing oxides of sulfur include $La_2O_3$, $La_{.6}Sr_{.4}CoO_3$ (a perovskite), $ZnMoO_4$, $FeWO_4$, etc. These catalyst materials may, or may not, retain the molecular formula and/or structure set forth here during the process of the present invention, since the sulfur atom can be highly reactive towards, and combine with, certain elements in the catalyst examples. Lanthanum oxides, for example, tend to form lanthanum oxysulfides, and perovskites, such as the aforementioned lanthanum-strontium-cobalt perovskite, often lose their perovskite structure when in contact with oxides of sulfur, for example.

Methods for making and using these catalysts are well known in the art. Examples of references describing these catalysts include Baglio, "Lanthanum Oxysulfide as a Catalyst for the Oxidation of CO and COS by $SO_2$," Ind. Eng. Chem. Prod. Res. Dez. (1982) vol. 21, pp. 38-41 and Hibbert et al, "Flue Gas Desulfurization: Catalytic Removal of Sulfur Dioxide by Carbon Monoxide on Sulphided $La_{1-x}Sr_xCoO_3$," Part II, Applied Catalysis (1988) vol. 41, pp. 289-299, which are each incorporated fully herein by reference for the relevent portions of their disclosure.

This process of the present invention is generally conducted at a temperature of at least about 300°C, and preferably at a temperature of at least about 400°C. The process temperature is preferably no greater than about 1000°C, and more preferably no greater than about 900°C. The temperature for a particular electrochemical cell/feed gas composition system can easily be optimized by one of ordinary skill in the art by checking conversion rates at different temperatures for the optimum conversion rate temperature. The upper limit to operating temperature is generally just below the temperature at which the electrochemical cell components decompose into undesired materials.

The step of heating the electrochemical cell may be partially or completely provided by the heat normally present in the flue or exhaust gas, such as that generated by combustion of hydrocarbons or may be heated by an external source. Methods of temperature control, including cooling by injection of a lower temperature gas or mixture of gases into the reactant gas zone and/or the zone containing the flue or exhaust gas, convective cooling, liquid cooling, etc., may be used if necessary to prevent overheating during the electrochemical process, and can be accomplished by various means which are known in the art. Such means are contemplated as being within the scope of this invention.

Generally, this process of the present invention is conducted at a pressure of from about 10 to about 10000 kPa (0.1 to about 100 atmospheres), more preferably between about 50 to about 1000 kPa (0.5 to about 10 atmospheres), and even more preferably about 100 kPa (1.0 atmosphere).

The flow rate of the sulfur and/or nitrogen oxide-containing gas stream through the cell may be varied as desired so long as there is sufficient contact by the gas stream with the cathode to obtain the desired reduction in sulfur and nitrogen oxide emissions. Contact times of from 0.1 to about 100 seconds may be used, although contact times of from 1 to 20 seconds are generally sufficient.

The flow rate of the reducing gas may also be varied as desired so long as there is sufficient contact by the reducing gas with the anode to obtain the desired reduction of sulfur and nitrogen oxide emissions.

In the following Examples, oxygen-consuming gases are treated in a laboratory reactor similar to the reactor illustrated in Fig. 1. The dual conductor membranes used in Examples 1-6 were prepared as follows.

Example A

The dual conductor membrane used in Examples 1 and 2 below is fabricated by making a disk which contains palladium metal as the electronically-conductive phase and yttria-stabilized zirconia (hereinafter "YSZ") as the ionically-conductive phase. A powder mixture of 50% each of palladium oxide and yttria (8 mol.%)-stabilized zirconia is first made. The powder is then heated in a mixture of hydrogen and nitrogen atmospheres at 400°C for 15 minutes to reduce the palladium oxide to palladium metal. To 4.0 grams of the mixture are added 0.4 grams Carbowax 20M™ (obtained from Supelco) dissolved in chloroform, and the resulting mixture is dried at 85°C. The resulting Pd/yttria-stabilized zirconia/Carbowax 20M™ powder is pressed into a disk using 60,000 psi applied pressure. The disk is then sintered in air at 1500°C for 30 minutes. The resultant disk is dense and gas tight. The disk is one inch (2.54 cm) in diameter and 0.03 inch (0.76 mm) thick.

Example B

The dual-conductor membrane used in Example 3 below is fabricated by making a disk which contains platinum metal as the electronically-conductive phase and YSZ as the ionically-conductive phase. 9.52 grams of Engelhard Platinum Ink (a product of Engelhard Corporation: Cat. no. 6926) is diluted with 3cc of alpha-terpineol and then 2.00 grams of yttria (8 mol.%)-stabilized zirconia is admixed in the diluted ink. The mixture is evaporated to dryness and the terpineol burned off in an oven at 100°C. The dried mass is then pulverized and 8.49 grams of the dried, pulverized powder is added to 0.94 grams of Carbowax 20M™ dissolved in 20cc of chloroform. The chloroform is evaporated off and the remaining powder is dried in an oven at 85°C for about 30 minutes and the powder is lightly reground and seived through a 120 mesh seive. Then 5.00 grams of the seived Pt/yttria-stabilized zirconia/Carbowax 20M™ powder is pressed into a disk having a diameter of 1-3/8 inch (3.50cm) using 60,000 psi applied pressure. The disk is then heated at a rate of 1-1/2°C/minute to 1650°C, sintered in air at 1650°C for two hours, and cooled at a rate of 4°C/minute. The resultant disk is dense and gas-tight.

Example C

The dual-conductor membrane used in Example 4 below is fabricated by making a disk which contains a combination of lanthanum, chromium and magnesium oxides as the electronically-conductive phase and YSZ as the ionically-conductive phase. A powder mixture of 0.25 grams MgO, 5.52 grams $CrO_3$ and 10.00 grams $La_2O_3$ is first made. The powder is then dried at 100°C and recrushed. Then 5.0 grams of the resulting $La(Cr_9Mg)$ powder is added to a hot aqueous solution containing 0.5 grams of $B_2O_3$ and the resulting solution is then dried and crushed to a very fine powder. Then 4.5cc of the B-MgLaCr powder is admixed with 4.5cc of yttria (8 mol.%)-stabilized zirconia followed by 10 weight percent Carbowax 20M™ dissolved in chloroform. The resulting mixture is then dried and recrushed into a powder mixture. 4.0 grams of the powder mixture is pressed into a disk using 60,000 psi applied pressure. The disk is heated at a rate of from 1°C to 2°C/min. to 1400°C, sintered in air at 1400°C for a total of 45 minutes, and cooled at a rate of 3.9°C/min. The resultant disk is dense and gas tight.

Example D

The dual conductor membrane used in Example 5 below is fabricated by making a disk which contains $BMgLaCrO_x$ as the electronically-conductive phase and YSZ as the ionically-conductive phase in accordance with Example C above which after sintering is impregnated on one side (the anode side) with praeseodymium, yttrium, and zirconium. The $BMgLaCro_x$/YSZ disk is impregnated by applying 0.1cc of an aqueous solution containing 0.218 grams $Pr(NO_3)_3 \cdot 5H_2O$, 0.212 grams $Zr(NO_3)_4 \cdot 6H_2O$, and 0.0115 grams $Y(NO_3)_3 \cdot 6H_2O$ per cc of water to one surface of the disk. The disk is then dried and heated to 1100°C under air.

Example E

The dual conductor membrane used in Example 6 below is fabricated by making a disk which contains praseodymium-doped indium oxide as the electronically-conductive phase and YSZ as the ionically-conductive phase. A powder mixture of 31.22 grams of $In_2O_3$ powder, 4.26 grams of $Pr_6O_{11}$ powder, 29.70 grams of yttria (8 mol.%)-stabilized zirconia powder, 100cc of distilled $H_2O$, four drops of Darvan C (a dispersing agent commercially available from R. T. Vanderbilt and Company, Inc., of Norwalk, Connecticut) and zirconia grinding media is milled in a ball mill for 17 hours. The mixture is then dried at 200°C, 10 weight percent Carbowax 20M in chloroform is admixed, and the total mixture is again dried at 100°C to remove the chloroform. The powder mixture is then recrushed and 4.0 grams of the mixture is pressed into a disk using 413.7 MPa (60,000 psi) applied pressure. The disk is then heated at a rate of from 0.5°C to 1°C/min. to 1550°C, sintered in air at 1550°C for 3 hours, and cooled at a rate of 1°C/min. The resultant disk is dense and gas tight and has a final diameter of 3.12cm.

An electron photomicrograph back-scattered image of the surface of the dual conductor membrane prepared according to Example E above at 500 times magnification is shown in Fig. 4. Two regions that correspond to the two phases of the membrane are clearly evident in the image. The flatter, smoother regions comprise the oxide ion conductive phase, primarily yttria-stabilized zirconia, as confirmed by X-ray adsorption mapping. The thin, small-grained ribbon extending from nearly the top to the bottom in the center of the micrograph is the electronically conductive phase comprised primarily of indium oxide.

A second electron photomicrograph of the same membrane of Example 5 in cross section magnified 5,000 times is shown in Fig. 5. The small, white particles are the electronically conducting indium-containing phase and the gray region is the ionically conducting phase, primarily yttria-stabilized zirconia. The extremely dark regions are due to small voids created in the cross-section surface during sample preparation.

Each dual-conductor disk of Examples A-E above is bonded between two one-inch diameter YSZ tubes. One end of this assembly is fitted with a quartz-lined stainless steel feed tube for introducing the oxygen-consuming gas and the other end of this assembly is fitted with a stainless steel feed tube for introducing the oxygen-containing gas. In each of the following Examples, the assembly is placed in a split furnace which can be heated to 1100°C.

Unless otherwise specified herein, all parts, percents, ratios and the like are by volume at standard temperature and pressure (STP, 25°C and 1 atmosphere). When temperature or pressure are not specified herein, the temperature is room temperature (about 25°C) and the pressure is about one atmosphere.

Example 1

The reactor assembly containing the Pd/YSZ dual conductor membrane of Example A is heated to 1100°C with nitrogen fed at a rate of about 60cc per minute to the side intended for the oxygen-consuming gas and air fed at 200cc per minute to the opposite side of the dual-conductor membrane intended for the oxygen-containing gas. The nitrogen stream is then replaced with a gas containing 90 parts hydrogen and 10 parts argon supplied at a rate which delivers 61.0cc per minute hydrogen gas at STP. The effluent gas is passed through a cold trap of dry-ice/acetone (-78°C) to collect the water produced and then through a gas collector for gas chromatography analysis. The hydrogen-argon gas mixture is fed to the reactor for three hours, and 1.23 grams of water is collected during that reaction time period.

Gas chromatography analysis shows no nitrogen, indicating that there is no leak of air into the reactor, and that all the oxygen is transported through the dual-conductor disk.

The surface area of the disk exposed to hydrogen is 2.2 cm$^2$ and the amount of oxygen transported through the disk is equivalent to a current density of 550 mA/cm$^2$.

Example 2

The reaction process in this Example is conducted in the same manner as in the preceding Example 1, except that the hydrogen-argon gas mixture is replaced by a gas mixture containing 17 parts methane and 83 parts nitrogen.

Gas chromatographic analysis of the vent gas reveals that a 94% yield of carbon monoxide is obtained mixed with hydrogen in a 1:2 molar ratio. The amount of oxygen transported through the disk is equivalent to a current density of 531 mA/cm$^2$.

The above result shows that nearly quantitative conversion of a mixture of hydrocarbons to synthesis gas can be obtained without an external circuit for the flow of electrons.

Example 3

The reaction process in this Example is conducted in the same manner as in the preceding Example 1, except that the dual conductor membrane is replaced with the Pt/YSZ membrane made according to Example B, the hydrogen-argon gas mixture is supplied at a rate which delivers 61.6cc per minute hydrogen gas at STP, and the hydrogen-argon gas mixture is fed to the reactor for two hours and thirty minutes. The reactor produces 0.38 grams of water.

The surface area of the disk exposed to hydrogen is $1.0cm^2$ and the amount of oxygen transported through the disk is equivalent to a current density of 463 $mA/cm^2$.

Example 4

The reaction process in this Example is conducted in the same manner as in the preceding Example 1, except the dual-conductor membrane is replaced with the $BMgLaCrO_x/YSZ$ membrane made in accordance with Example C, the hydrogen-argon gas mixture is fed to the reactor over a period of one hour, and 0.107 grams of water is collected during that reaction time period.

The surface area of the disk exposed to hydrogen is $2.8cm^2$ and the amount of oxygen transported through the disk is equivalent to a maximum current density of 114 $mA/cm^2$

Example 5

The reaction process in this Example is conducted in the same manner as in the preceding Example 1, except (a) the dual-conductor membrane is replaced with the $PrYZr-BMgLaCrO_x/YSZ$ membrane made according to Example D above positioned so that the side impregnated with praseodynium, yttrium, and zirconium comes in contact with the hydrogen-argon gas mixture, (b) the hydrogen-argon gas mixture is fed to the reactor for one hour and thirty minutes (Run A) and for a period of two hours (Run B), and (c) 0.16 grams and 0.22 grams of water are collected during Runs A and B, respectively.

The surface area of the disk exposed to hydrogen is $2.8cm^2$, so that the amount of oxygen transported through the disk is equivalent to a current density of 114 $mA/cm^2$ for Run A and 117 $mA/cm^2$ for Run B.

Example 6

The reaction process in this Example is conducted in the same manner as in the preceding Example 1, except the dual-conductor membrane is replaced with the $PrInO_x/YSZ$ membrane made according to Example E, the hydrogen-argon gas mixture is fed to the reactor for two hours, and 0.90 grams of water is collected during that reaction time period.

Gas chromatography analysis shows no nitrogen, indicating that there is no leak of air into the reactor, and that all the oxygen is transported through the dual-conductor disk.

The surface area of the disk exposed to hydrogen is $2.2cm^2$ and the amount of oxygen transported through the disk is equivalent to a current density of 601 $mA/cm^2$.

**Claims**

1. A solid multi-component membrane characterised by an intimate, gas-impervious, multi-phase mixture which contains from 1 to 75 parts by volume of an electronically-conductive phase and from 25-99 parts by volume of an ionically-conductive phase, wherein the electronically-conductive phase comprises silver, gold, platinum, palladium, rhodium, ruthenium, bismuth oxide, a praseodymium-indium oxide mixture, a cerium-lanthanum oxide mixture, a niobium-titanium oxide mixture, a magnesium-lanthanum-chromium oxide mixture, or $YBa_2Cu_3O_x$ wherein x is a number in the range from 6 to 7, or a mixture thereof.

2. A solid membrane as claimed in claim 1, which comprises an intimate, gas-impervious, multi-phase mixture consisting essentially of 1 to 75 parts by volume of the electronically-conductive phase and from 25 to 99 parts by volume of the ionically-conductive phase.

3. A solid membrane as claimed in either claim 1 or claim 2 wherein the electronically-conductive phase comprises magnesium-doped lanthanum chromite.

4. A process for the preparation of a solid membrane as claimed in any one of claims 1 to 3, which comprises the steps of:

   (a) preparing an intimate multi-phase mixture of at least one material which is electronically-conductive and at least one oxygen ion-conductive material,
   (b) forming the mixture into a desired shape, and
   (c) heating the formed mixture to a temperature of at least about 500°C to form a dense and solid membrane.

5. A process for the preparation of a solid membrane as claimed in any one of claims 1 to 3, which comprises the steps of:

   (a) preparing an intimate multi-phase mixture of at least one metal oxide, the metal of which is electronically-conductive, and at least one oxygen ion-conductive material,
   (b) heating the mixture at an elevated temperature in a reducing atmosphere to reduce the metal oxide to metal,

(c) forming the reduced mixture into a desired shape, and

(d) heating the formed mixture to a temperature of at least 500°C to form a dense and solid membrane.

6. An electrochemical reactor cell for reacting an oxygen-consuming gas with an oxygen-containing gas in an environment containing either the oxygen-consuming gas or the oxygen-containing gas, characterised by a solid multi-component membrane having an entrance end, an exit end and a passage therebetween for the movement of one or more gases from the entrance end to the exit end, wherein the solid membrane is as claimed in any one of claims 1 to 3.

7. An electrochemical reactor cell as claimed in claim 6 wherein the solid membrane is a solid cylindrical core having a circular passage for the movement of one or more gases therethrough.

8. An electrochemical reactor cell as claimed in either claim 6 or claim 7, wherein the solid membrane is on a solid gas-permeable support.

9. An electrochemical reactor cell as claimed in any one of claims 6 to 8 wherein the electronically-conductive phase comprises a magnesium-doped lanthanum chromite.

10. An electrochemical reactor for reacting an oxygen-consuming gas with an oxygen-containing gas characterised by:
a shell having an entrance end, an exit end and a pass age therebetween for the movement of one or more gases from the entrance end to the exit end, and at least one electrochemical reactor cell positioned within the shell having an entrance end, an exit end and a passage therebetween for the movement of one or more gases from the entrance end to the exit end, so that the shell and the reactor cell together form a first zone for introducing, reacting and expelling a first gas or gas mixture and the passage through the reactor cell forms a second zone within the electrochemical reactor for introducing, reacting and expelling a second gas or gas mixture, wherein the electrochemical reactor cell is as claimed in any one of claims 6 to 9.

11. An electrochemical process for oxidizing a gas capable of reacting with oxygen characterised by:

(a) providing an electrochemical reactor cell comprising first and second zones separated by a solid multi-component membrane as claimed in any one of claims 1 to 3,
(b) heating the electrochemical cell to a temperature of from 300°C to 1400°C,

(c) passing an oxygen-containing gas in contact with the membrane in the first zone, and
(d) passing a gas capable of reacting with oxygen in contact with the membrane in the second zone.

12. A process as claimed in claim 11 conducted at a temperature of 1000°C to 1400°C, wherein the gas capable of reacting with oxygen is methane, natural gas, ethane, or other light hydrocarbon gas, or a mixture thereof, and further comprising:

(e) recovering synthesis gas from the second zone.

13. A process as claimed in claim 12 wherein (d) comprises passing a methane-steam mixture in contact with the membrane in the second zone.

14. A process as claimed in claim 11 conducted at a temperature of 550°C to 950°C, wherein the gas capable of reacting with oxygen is methane, natural gas, ethane, or other light hydrocarbon gas, or a mixture thereof, and further comprising:

(e) recovering one or more unsaturated hydrocarbons from the second zone.

15. An electrochemical process for producing hydrogen cyanide from methane and ammonia characterised by:

(a) providing an electrochemical reactor cell comprising first and second zones separated by a solid multi-component membrane as claimed in any one of claims 1 to 3;
(b) heating the electrochemical reactor cell to a temperature of from 1000°C to 1400°C;
(c) passing an oxygen-containing gas in contact with the membrane in the first zone;
(d) passing methane and ammonia in contact with the membrane in the second zone; and
(e) recovering hydrogen cyanide from the second zone.

16. A process as claimed in any one of claims 11 to 15, wherein the oxygen-containing gas of (c) is air.

17. A process for extracting oxygen from $N_2O$, NO, $NO_2$, $SO_2$, $SO_3$ and/or steam, characterised by the process of claim 11 wherein step

(c) comprises passing a gas containing $N_2O$, NO, $NO_2$, $SO_2$, $SO_3$ or steam, or a mixture thereof, in contact with the membrane in the first zone.

**Patentansprüche**

1. Feste Mehrkomponentenmembran, gekennzeichnet durch ein inniges, gasundurchlässiges Mehrphasengemisch, das 1 bis 75 Volumenteile einer elektronisch leitfähigen Phase und 25 bis 99 Volumenteile einer ionisch leitfähigen Phase enthält, wobei die elektronisch leitfähige Phase Silber, Gold, Platin, Palladium, Rhodium, Ruthenium, Wismutoxid, ein Praseodym-Indiumoxidgemisch, ein Cer-Lanthanoxidgemisch, ein Niob-Titanoxidgemisch, ein Magnesium-Lanthan-Chromoxidgemisch oder $YBa_2Cu_3O_x$, worin x eine Zahl in Bereich von 6 bis 7 ist, oder ein Gemisch davon, umfaßt.

2. Feste Membran nach Anspruch 1, umfassend ein inniges, gasundurchlässiges Mehrphasengemisch, in wesentlichen bestehen aus 1 bis 75 Volumenteilen einer elektronisch leitfähigen Phase und 25 bis 99 Volumenteilen einer ionisch leitfähigen Phase.

3. Feste Membran nach entweder Anspruch 1 oder Anspruch 2, wobei die elektronisch leitfähige Phase magnesiumdotiertes Lanthanchromit umfaßt.

4. Verfahren zur Herstellung einer festen Membran nach einem der Ansprüche 1 bis 3, umfassend die Schritte:

     (a) Herstellung eines innigen Mehrphasengemisches mindestens eines Materials, das elektronisch leitfähig ist und mindestens eines Sauerstoffionen leitfähigen Materials,
     (b) Verformen des Gemisches zu einer gewünschten Form und
     (c) Erhitzen des geformten Gemisches auf eine Temperatur von mindestens etwa 500°C zur Herstellung einer dichten und festen Membran.

5. Verfahren zur Herstellung einer festen Membran nach einem der Ansprüche 1 bis 3, umfassend die Schritte:

     (a) Herstellen eines innigen Mehrphasengemisches mindestens eines Metalloxids, wobei das Metall davon elektronisch leitfähig ist und mindestens eines Sauerstoffionen leitfähigen Materials,
     (b) Erhitzen des Gemisches auf eine erhöhte Temperatur in reduzierender Atmosphäre zur Reduktion des Metalloxids zu Metall,
     (c) Formen des reduzierten Gemisches zu einer gewünschten Form und
     (d) Erhitzen des geformten Gemisches auf eine Temperatur von mindestens 500°C zur Herstellung einer dichten und festen Membran.

6. Elektrochemische Reaktorzelle zur Umsetzung eines Sauerstoff verbrauchenden Gases mit einem Sauerstoff enthaltenden Gas in einer Umgebung, die entweder das Sauerstoff verbrauchende Gas oder das Sauerstoff enthaltende Gas enthält, gekennzeichnet durch eine feste Mehrkomponentenmembran, die ein Einlaßende, ein Auslaßende und einen Durchlaß dazwischen zur Bewegung eines oder mehrerer Gase vom Einlaßende zum Auslaßende aufweist, wobei die feste Membran eine gemäß einem der Ansprüche 1 bis 3 ist.

7. Elektrochemische Reaktorzelle nach Anspruch 6, wobei die feste Membran ein fester zylindrischer Kern mit einem kreisförmigen Durchlaß für die Bewegung eines oder mehrerer Gase hindurch ist.

8. Elektrochemische Reaktorzelle nach entweder Anspruch 6 oder Anspruch 7, wobei die feste Membran ein fester gasdurchlässiger Träger ist.

9. Elektrochemische Reaktorzelle nach einem der Ansprüche 6 bis 8, wobei die elektronisch leitfähige Phase ein magnesiumdotiertes Lanthanchromit umfaßt.

10. Elektrochemischer Reaktor zur Umsetzung eines Sauerstoff verbrauchenden Gases mit einem Sauerstoff enthaltenden Gas, gekennzeichnet durch:
     eine Hülle mit einem Einlaßende, einem Auslaßende und einem Durchlaß dazwischen zur Bewegung eines oder mehrerer Gase vom Einlaßende zum Auslaßende und mindestens eine elektrochemische Reaktorzelle, angeordnet innerhalb der Hülle mit einem Einlaßende, einem Auslaßende und einem Durchlaß dazwischen zur Bewegung eines oder mehrerer Gase vom Einlaßende zum Auslaßende, so daß die Hülle und die Reaktorzelle zusammen eine erste Zone zur Einführung, Umsetzung und zum Ausstoß eines ersten Gases oder Gasgemisches bildet und der Durchlaß durch die Reaktorzelle eine zweite Zone innerhalb des elektrochemischen Reaktors zur Einführung, Umsetzung und zum Ausstoß eines zweiten Gases oder Gasgemisches bildet, wobei die elektrochemische Reaktorzelle eine nach einem der Ansprüche 6 bis 9 ist.

11. Elektrochemisches Verfahren zur Oxidation eines Gases, das in der Lage ist, mit Sauerstoff umgesetzt zu werden, gekennzeichnet durch:

     (a) Bereitstellung einer elektrochemischen Reaktorzelle, umfassend erste und zweite Zonen, getrennt durch eine feste Mehrkomponentenmembran nach einem der Ansprüche 1 bis 3,
     (b) Erhitzen der elektrochemischen Zelle auf eine Temperatur von 300°C bis 1400°C,

(c) Durchleiten eines Sauerstoff enthaltenden Gases in Kontakt mit der Membran in der ersten Zone und

(d) Durchführen eines Gases, das in der Lage ist, mit Sauerstoff zu reagieren in Kontakt mit der Membran in der zweiten Zone.

12. Verfahren nach Anspruch 11, ausgeführt bei einer Temperatur von 1000°C bis 1400°C, wobei das Gas, das in der Lage ist, mit Sauerstoff umgesetzt zu werden, Methan, Erdgas, Ethan oder ein anderes leichtes Kohlenwasserstoffgas oder ein Gemisch davon ist und außerdem umfaßt:

(e) Gewinnen von Synthesegas aus der zweiten Zone.

13. Verfahren nach Anspruch 12, wobei (d) Durchleiten eines Methan-Dampf-Gemisches in Kontakt mit der Membran in der zweiten Zone umfaßt.

14. Verfahren nach Anspruch 11, ausgeführt bei einer Temperatur von 550°C bis 950°C, wobei das Gas, das in der Lage ist, mit Sauerstoff umgesetzt zu werden, Methan, Erdgas, Ethan oder ein anderes leichtes Kohlenwasserstoffgas oder ein Gemisch davon ist und außerdem umfaßt:

(e) Gewinnen eines oder mehrerer ungesättigter Kohlenwasserstoffe aus der zweiten Zone.

15. Elektrochemisches Verfahren zur Herstellung von Cyanwasserstoff aus Methan und Ammoniak, gekennzeichnet durch:

(a) Bereitstellen einer elektrochemischen Reaktorzelle, umfassend erste und zweite Zonen, getrennt durch eine feste Mehrkomponentenmembran nach einem der Ansprüche 1 bis 3;
(b) Erhitzen der elektrochemischen Reaktorzelle auf eine Temperatur von 1000°C bis 1400°C;
(c) Durchleiten eines Sauerstoff enthaltenden Gases in Kontakt mit der Membran in der ersten Zone;
(d) Durchleiten von Methan und Ammoniak in Kontakt mit der Membran in der zweiten Zone und
(e) Gewinnen von Cyanwasserstoff aus der zweiten Zone.

16. Verfahren nach einem der Ansprüche 11 bis 15, wobei das Sauerstoff enthaltende Gas (c) Luft ist.

17. Verfahren zur Extraktion von Sauerstoff aus $N_2O$, NO, $NO_2$, $SO_2$, $SO_3$ und/oder Dampf, gekennzeichnet durch das Verfahren nach Anspruch 11, wobei der Schritt (c) Durchleiten eines Gases, enthaltend $N_2O$, NO, $NO_2$, $SO_2$, $SO_3$ oder Dampf oder ein Gemisch davon, in Kontakt mit der Membran in der ersten Zone umfaßt.

## Revendications

1. Membrane multicomposant solide caractérisée par un mélange intime, multiphase, imperméable aux gaz qui contient de 1 à 75 parties en volume d'une phase électroniquement conductrice et de 25 à 99 parties en volume d'une phase ioniquement conductrice, dans laquelle la phase électroniquement conductrice comprend de l'argent, de l'or, du platine, du palladium, du rhodium, du ruthénium, de l'oxyde de bismuth, un mélange d'oxydes de praséodyme et indium, un mélange d'oxydes de cérium et lanthane, un mélange d'oxydes de niobium et titane, un mélange d'oxydes de magnésium, lanthane et chrome, ou $YBa_2Cu_3O_x$ dans lequel x est un nombre compris entre 6 et 7, ou un de leurs mélanges.

2. Membrane solide selon la revendication 1, qui comprend un mélange intime, multiphase, imperméable aux gaz se composant essentiellement de 1 à 75 parties en volume de la phase électroniquement conductrice et de 25 à 99 parties en volume de la phase ioniquement conductrice.

3. Membrane solide selon l'une des revendications 1 ou 2, dans laquelle la phase électroniquement conductrice comprend le chromite de lanthane dopé par du magnésium.

4. Procédé pour la préparation d'une membrane solide selon l'une des revendications 1 à 3, qui comprend les étapes consistant:

(a) à préparer un mélange intime, multiphase d'au moins une matière qui est conductrice des électrons et d'au moins une matière conductrice des ions oxygène,
(b) à façonner le mélange en une forme souhaitée, et
(c) à chauffer le mélange formé à une température d'au moins environ 500°C pour former une membrane dense et solide.

5. Procédé pour la préparation d'une membrane solide selon l'une des revendications 1 à 3, qui comprend les étapes consistant:

(a) à préparer un mélange intime, multiphase d'au moins un oxyde métallique, dont le métal est conducteur des électrons, et d'au moins une matière conductrice des ions oxygène,
(b) à chauffer le mélange à une température élevée dans une atmosphère réductrice pour réduire l'oxyde métallique en métal,
(c) à façonner le mélange réduit en une forme souhaitée, et

(d) à chauffer le mélange formé à une température d'au moins 500°C pour former une membrane dense et solide.

6. Cellule de réacteur électrochimique pour faire réagir un gaz consommant de l'oxygène avec un gaz contenant de l'oxygène dans un environnement contenant soit le gaz consommant de l'oxygène, soit le gaz contenant de l'oxygène, caractérisée par une membrane multicomposant solide ayant une extrémité d'entrée, une extrémité de sortie et un passage entre elles pour le déplacement d'un ou plusieurs gaz de l'entrée vers la sortie, dans laquelle la membrane solide est selon l'une des revendications 1 à 3.

7. Cellule de réacteur électrochimique selon la revendication 6, dans lequel la membrane solide est un noyau cylindrique solide comportant un passage circulaire le traversant pour le déplacement d'un ou plusieurs gaz.

8. Cellule de réacteur électrochimique selon l'une des revendications 6 ou 7, dans laquelle la membrane solide est sur un support solide perméable aux gaz.

9. Cellule de réacteur électrochimique selon l'une des revendications 6 à 8, dans laquelle la phase électroniquement conductrice comprend un chromite de lanthane dopé par du magnésium.

10. Réacteur électrochimique pour faire réagir un gaz consommant de l'oxygène avec un gaz contenant de l'oxygène caractérisé par :
une enveloppe ayant une extrémité d'entrée, une extrémité de sortie et un passage entre elles pour le déplacement d'un ou de plusieurs gaz de l'extrémité d'entrée vers l'extrémité de sortie, et au moins une cellule de réacteur électrochimique placée dans l'enveloppe, ayant une extrémité d'entrée, une extrémité de sortie et un passage entre elles pour le déplacement d'un ou plusieurs gaz de l'extrémité d'entrée vers l'extrémité de sortie, de sorte que l'enveloppe et la cellule de réacteur forment ensemble une première zone pour introduire, faire réagir et expulser un premier gaz ou mélange gazeux et le passage à travers la cellule de réacteur forme une deuxième zone à l'intérieur du réacteur électrochimique pour introduire, faire réagir et expulser un deuxième gaz ou mélange gazeux, dans lequel la cellule de réacteur électrochimique est selon l'une des revendications 6 à 9.

11. Procédé électrochimique pour oxyder un gaz capable de réagir avec l'oxygène caractérisé en ce qu'il consiste :

(a) à fournir une cellule de réacteur électrochimique comprenant une première zone et une deuxième zone séparée de la première zone par une membrane multicomposant solide selon l'une des revendications 1 à 3,
(b) à chauffer la cellule électrochimique à une température comprise entre 300°C et 1 400°C,
(c) à faire passer un gaz contenant de l'oxygène en contact avec la membrane dans la première zone, et
(d) à faire passer un gaz capable de réagir avec l'oxygène en contact avec la membrane dans la deuxième zone.

12. Procédé selon la revendication 11 effectué à une température comprise entre 1 000°C et 1 400°C, dans lequel le gaz capable de réagir avec l'oxygène est le méthane, le gaz naturel, l'éthane, ou autres hydrocarbures gazeux, ou un de leurs mélanges, et consistant de plus :

(e) à récupérer le produit de la deuxième zone.

13. Procédé selon la revendication 12, dans lequel (d) consiste à faire passer un mélange méthane-vapeur d'eau en contact avec la membrane dans la deuxième zone.

14. Procédé selon la revendication 11, effectué à une température comprise entre 550°C et 950°C, dans lequel le gaz capable de réagir avec l'oxygène est le méthane, le gaz naturel, l'éthane, ou autres hydrocarbures légers gazeux, ou un de leurs mélanges, et consistant de plus :

(e) à récupérer un ou plusieurs hydrocarbures insaturés de la deuxième zone.

15. Procédé électrochimique pour produire du cyanure d'hydrogène à partir du méthane et de l'ammoniac, caractérisé en ce qu'il consiste :

(a) à fournir une cellule de réacteur électrochimique comprenant une première zone et une deuxième zone séparées par une membrane multicomposant solide selon l'une des revendications 1 à 3;
(b) à chauffer la cellule de réacteur électrochimique à une température comprise entre 1 000°C et 1 400°C;
(c) à faire passer un gaz contenant de l'oxygène en contact avec la membrane dans la première zone;
(d) à faire passer le méthane et l'ammoniac en contact avec la membrane dans la deuxième zone; et
(e) à récupérer le cyanure d'hydrogène de la deuxième zone.

16. Procédé selon l'une des revendications 11 à 15, dans lequel le gaz contenant de l'oxygène de (c) est l'air.

17. Procédé pour extraire de l'oxygène de $N_2O$, NO, $NO_2$, $SO_2$, $SO_3$ et/ou de vapeur d'eau, caractérisé par le procédé selon la revendication 11 dans lequel l'étape (c) consiste à faire passer un gaz contenant $N_2O$, NO, $NO_2$, $SO_2$, $SO_3$ ou de la vapeur d'eau, ou un de leurs mélanges, en contact avec la membrane dans la première zone.

FIG. 1

FIG. 2

FIG. 3

FIG. 4

FIG. 5

FIG. 6

FIG. 7